# EUROPEAN PATENT SPECIFICATION

(11) **EP 1 961 595 B1**
(45) Date of publication and mention of the grant of the patent: **09.12.2009**
(21) Application number: 08151221.2
(22) Date of filing: 08.02.2008
(51) Int. Cl.: B60H 1/00, F25D 21/14

(54) **Refrigerator unit**
Kühleinheit
Unité de réfrigérateur

(30) Priority: 22.02.2007 JP 2007042321
(43) Date of publication of application: 27.08.2008
(73) Proprietor: MITSUBISHI HEAVY INDUSTRIES, LTD., Tokyo 108-8215 (JP)
(72) Inventor: Taruma, Koushi c/o Air-Conditioning&Refrigeration Syst.Headq., Kiyosu, Aichi-ken 452-8561 (JP); Kai, Masakazu c/o Air-Conditioning&Refrigeration Syst.Headq., Kiyosu, Aichi-ken 452-8561 (JP)
(74) Representative: Cardy, Sophie Marie

(56) References cited:
- EP-A- 1 022 527
- EP-A- 1 306 246
- DE-A1- 19 855 224
- US-A- 3 451 226
- US-A- 5 878 592

## Description

### 1. FIELD OF THE INVENTION

The present invention relates to a refrigerator unit suitably applied to a refrigerator provided in a refrigerating container, a cold insulating chamber or a freezing chamber (simply referred to as a "cooler" hereinafter).

### 2. DESCRIPTION OF RELATED ART

Among transport refrigerators mounted in a cooler of a refrigerator vehicle, there is a type in which a refrigerator unit is mounted at an opening section provided in front of the cooler. This type of refrigerator is normally provided with a heat insulating wall that parts the inside and outside of the cooler on the side of the refrigerator unit, and a cooling machine such as an evaporator is disposed on the inner side of the heat insulating wall. This heat insulating wall is normally made of a low heat transmitting resin material such as foaming styrene.

Among the refrigerator units constructed as described above, one has been proposed in which a drain pan is formed under the evaporator by utilizing a part of a heat insulating wall to receive drain water dripping from the evaporator and to discharge the drain water to the outside via a drain discharging hole and a drain hose as disclosed in Japanese Patent Application Laid-Open No. 2000-213849 for example.

Moisture within air creates dew and spreads as frost on the surface of the evaporator in the refrigerator unit during a cooling operation. Hence, a defrosting operation for detecting and melting the frost is periodically carried out because heat exchange between air and refrigerant is hampered and cooling performance drops when the frost attaches to the surface of the evaporator. This defrosting operation is normally carried out by a hot gas bypassing method that guides high temperature and high pressure hot gas refrigerant discharged out of a compressor directly to the evaporator via a hot gas bypassing pipe to melt the frost by the heat of the hot gas refrigerant. In this case, an arrangement for preventing the drain water dripping from the evaporator from icing is normally made by providing a drain pan heater along the hot gas bypassing pipe so that the drain pan heater contacts with the surface of the drain pan.

However, when the drain pan is constructed by the heat insulating wall as described above, it is hard for the heat to evenly propagate on the surface of the drain pan because the drain pan is often made from a low heat transmitting resin material. Hence, the drain pan heater is disposed densely on the surface of the drain pan. Therefore, the following problems have occurred:
(1) Because the drain pan heater needs to be densely disposed, the heater becomes lengthy and complicated, thus increasing its cost.
(2) Because the drain pan heater is disposed in close contact with the surface of the drain pan, the drain pan heater may become a weir, hampering drainage of the drain water when the drain pan heater is densely disposed. Due to that, the drain water may remain undrained and the residual water may ice and become a nucleus of growth of residual ice.
(3) When the residual water or residual ice is produced, it exchanges heat with the hot gas refrigerant. This causes loss of heat of the drain pan heater, thus reducing the defrosting performance and prolonging the defrosting time.
(4) In the case where the temperature of the hot gas refrigerant becomes 100°C or more, thermal contraction (thermal deformation) may occur at part of the drain pan contacting with the drain pan heater, when the temperature of the hot gas refrigerant flowing in the drain pan heater exceeds a thermal contracting temperature of the drain pan (heat insulating wall made from resin material). Thus, the drain water may remain in the thermally contracted part and may cause icing.
(5) When icing occurs in the drain pan, unmelted ice is more likely to be produced during defrosting at the part separated from the drain pan heater because less heat is transferred there.

It should be noted that the same problems occur even when an electric heater is used as the drain pan heater and the defrosting heater.

An other refrigerator unit including a drain pan, and a drain pan heater has been disclosed in DE 198 55 224, which is considered as the closest prior art. However, the problem that the heat insulating wall may be thermally deformed still remains.

### BRIEF SUMMARY OF THE INVENTION

The present invention has been made in view of the circumstances described above and its object is to provide a refrigerator unit whose drainage is improved and which prevents ice from being produced by residual water since a drain pan heater will not hamper the drainage of drain water. This can also improve a defrosting performance of a refrigerator unit by reducing a loss of heat in the drain pan heater and can prevent a heat insulating wall from being thermally deformed.

In order to solve the aforementioned problems, the following means are adopted for a refrigerator unit according to the invention.

That is, a refrigerator unit according to the invention is such that a drain pan composed of a heat insulating wall is provided under an evaporator, a drain pan heater is disposed in contact with the surface of the drain pan, a thermal conductor is laid on the surface of the drain pan through the intermediary of a heat insulating layer and the drain pan heater is disposed in contact with the surface of the thermal conductor.

According to the invention, because the thermal conductor is laid on the surface of the drain pan, and the drain pan heater is disposed in contact with the surface of the thermal conductor, it is possible to transfer the heat of the drain pan heater to the whole thermal conductor by utilizing thermal conduction simply by disposing the drain pan heater in contact with part of the thermal conductor. Thereby, it becomes unnecessary to provide the drain pan heater evenly on the whole surface of the drain pan. Accordingly, it is possible to eliminate the problem that the drain pan heater becomes a weir and hampers drainage of drain water, to improve the drainage and to eliminate the problem that residual water remains, ices and spreads. Still further, it is possible to prevent unmelted ice from remaining because the entire thermal conductor can be evenly heated by the thermal conduction. Because no residual water or residual ice is produced, it is possible to reduce a loss of heat that otherwise occurs due to heat exchange between the drain pan heater and the residual water or residual ice. Furthermore, because the thermal conductor is laid on the surface of the drain pan through the intermediary of the heat insulating layer, it is possible to prevent the heat insulating wall from thermally deforming due to the high temperature drain pan heater and thermal conductor.

Further, according to the refrigerator unit described above, the drain pan heater may be composed of part of a hot gas bypassing pipe for guiding defrosting hot gas refrigerant to the evaporator.

According to this structure, the drain pan heater is composed of the part of the hot gas bypassing pipe for guiding the defrosting hot gas refrigerant to the evaporator. Because no residual water or residual ice is produced by laying the thermal conductor in this case, it is possible to reduce a loss of heat that otherwise occurs due to the heat exchange between the drain pan heater and the residual water or residual ice. Therefore, a quantity of heat equivalent to the loss of heat may be effectively utilized in defrosting the evaporator. It then allows the defrosting performance to be improved and the defrosting time to be shortened.

Still further, according to any one of the refrigerator units of the invention described above, the heat insulating layer may be composed of an insulation material or an air layer.

According to this structure, it is possible to block the heat from propagating from the high temperature drain pan heater and thermal conductor to the heat insulating wall by a heat insulating layer composed of an insulation material or an air layer. Accordingly, it is possible to prevent the heat insulating wall from being thermally deformed by the heat transferred from the drain pan heater and the thermal conductor.

Furthermore, according to any one of the refrigerator units of the invention described above, the thermal conductor may be composed of a plate made from aluminum alloy or copper alloy.

According to this structure, it is possible to effectively and quickly transfer the heat of the drain pan heater to the entire heat conductor because the thermal conductor is composed of the plate made from aluminum alloy or copper alloy that excels in heat transferring properties. Accordingly, it is possible to steadily prevent the drain water from icing within the drain pan and to drain the water smoothly.

Furthermore, according to any one of the refrigerator units of the invention described above, the thermal conductor may be provided only on a part of the surface of the drain pan corresponding to an area where drain water drips from the evaporator.

According to this structure, the thermal conductor is not provided on the whole surface of the drain pan but only on the part of the surface of the drain pan corresponding to the area where the drain water drips from the evaporator. It is also possible to prevent the drain water that drips from the evaporator from remaining and icing within the drain pan and to discharge all the drain water dripping from the evaporator steadily and quickly to the outside via the drain discharge hole. It minimizes a range where the thermal conductor is laid and saves the cost required to lay the thermal conductor.

Furthermore, according to any one of the refrigerator units of the invention described above, the drain pan heater may be disposed at position separated from an area where the drain water drips from the evaporator and flows to a drain discharging hole.

According to this structure, because the drain pan heater is disposed at the position separated from the area where the drain water drips from the evaporator and flows to the drain discharging hole, the drain water dripping from the evaporator may be quickly guided to the drain discharging hole and to the outside. Accordingly, the drainage of the drain water is not hampered by the drain pan heater and is maintained favorably.

According to the refrigerator unit of the invention, it becomes unnecessary to provide the drain pan heater evenly on the whole surface of the drain pan as it is possible to transfer heat of the drain pan heater to the whole thermal conductor by utilizing thermal conduction simply by disposing the drain pan heater in contact with part of the thermal conductor. Accordingly, it is possible to eliminate the problem that the drain pan heater becomes a weir and hampers the drainage of the drain water, to improve the drainage and to eliminate the problems that residual water remains, ices and spreads. Still further, it is possible to prevent unmelted ice from remaining because the entire thermal conductor can be evenly heated by the thermal conduction. Because no residual water or residual ice is produced, it is possible to reduce a loss of heat that otherwise occurs due to heat exchange between the drain pan heater and the residual water or residual ice. Furthermore, because the thermal conductor is laid through the intermediary of the heat insulating layer, it is possible to prevent the heat insulating wall from being thermally deformed due to the high temperature drain pan heater and thermal conductor.

### BRIEF DESCRIPTION OF THE SEVERAL VIEWS OF THE DRAWINGS

Fig. 1 is a side view of a refrigerator vehicle on which a refrigerator unit of a first embodiment of the invention is mounted;
Fig. 2 is a longitudinal section view of an evaporator unit of the refrigerator unit shown in Fig. 1; and
Fig. 3 is a schematic perspective view of a drain pan part of the evaporator unit shown in Fig. 2.

### DETAILED DESCRIPTION OF THE INVENTION

Embodiments of the invention will be explained below with reference to the drawings.

### First Embodiment

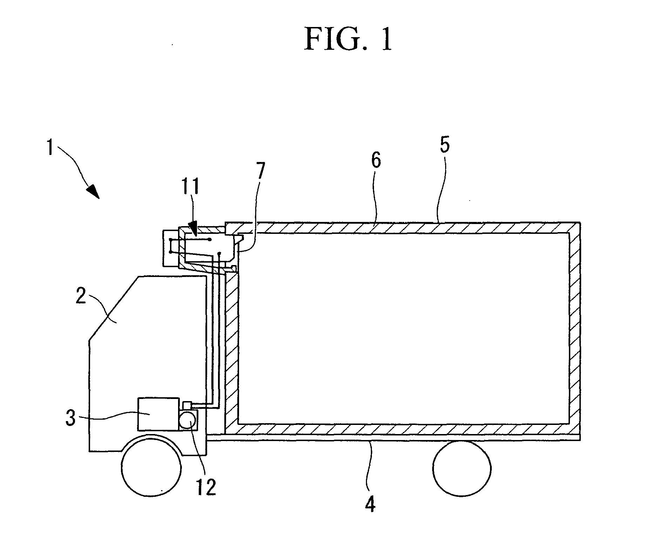

A first embodiment of the invention will be explained below by using Figs. 1 to 3.

Fig. 1 is a side view of a refrigerator vehicle on which a refrigerator unit of the first embodiment of the invention is mounted. The refrigerator vehicle 1 has a cabin 2, a traveling engine 3 mounted under the cabin 2, a chassis 4 extending behind the cabin 2 and a cooler 5 that is mounted on the chassis 4 and whose whole face is surrounded by a heat insulating wall 6. The cooler 5 is provided with an opening section 7 in the front and upper part thereof and a refrigerator unit 11 is mounted at the opening section 7. The present embodiment illustrates an evaporator-condenser integrated refrigerator unit 11 in which an evaporator unit is integrated with a condenser unit.

The refrigerator unit 11 is provided with a compressor 12 that operates by obtaining power from the traveling engine 3. A known refrigerating cycle is constructed by the compressor 12, the condenser and expansion valve not shown and an evaporator 16 described later and is arranged so as to cool the cooler 5 by an endothermic action of the evaporator 16.

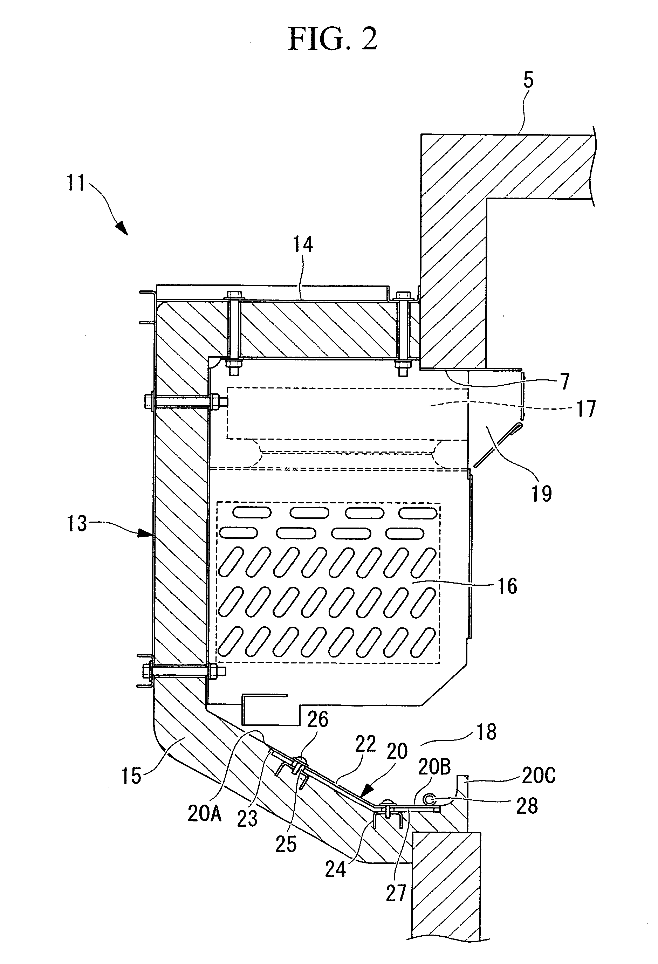

Fig. 2 is a section view of the evaporator unit 13 of the refrigerator unit 11. Although the condenser unit is provided in the front part (left side face of the figure) of the evaporator unit 13 and is integrally formed therewith, the condenser unit is not shown in the figure in the present embodiment.

The evaporator unit 13 has a unit body 14 fitted and attached into the opening section 7 provided in the front and upper part of the cooler 5. The unit body 14 is provided with a heat insulating wall 15 made of a low heat transmitting resin material such as foaming polystyrene and the heat insulating wall 15 insulates and makes a partition between the inside and the outside of the cooler 5.

The evaporator 16 and an evaporator fan 17 are integrally assembled and installed within the chamber of the unit body 14 formed by the heat insulating wall 15 so as to take in air within the cooler 5 from an intake port 18 via the evaporator fan 17, to cool through the evaporator 16 and to blow out within the cooler 5 from a blowout port 19.

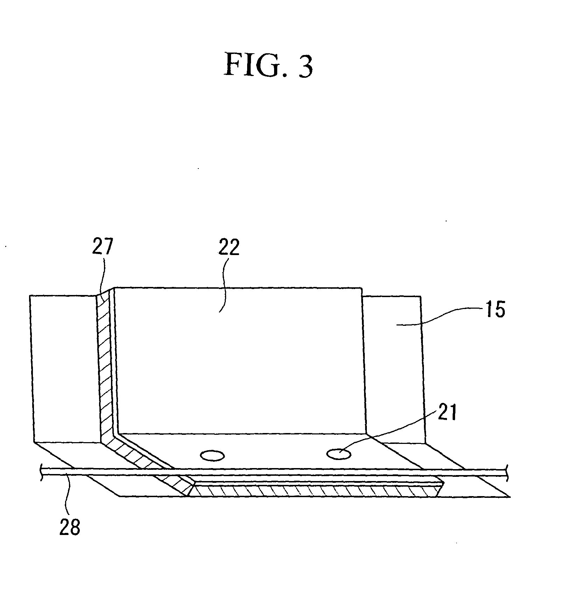

The unit body 14 is provided with a drain pan 20 located under the evaporator 16 and molded in a body with the heat insulating wall 15. The drain pan 20 is composed of a slope 20A formed from the front face to a bottom face of the unit body 14, a flat bottom 20B and a weir 20C formed at an opening end to the cooler 5 and receives drain water dripped from the evaporator 16 to guide the drain water to the outside through drain holes 21 (see Fig. 3) provided at suitable places of the bottom 20B.

A thermal conductor 22 composed of a plate made from aluminum alloy or copper alloy that excels in thermal conductivity is laid on the surface of the drain pan 20. An insulation material (heat insulating material) 27 is interposed between the thermal conductor 22 and the heat insulating wall 15 so as to insulate heat from the thermal conductor 22. The thermal conductor 22 is screwed to an insert fitting 24 buried in the heat insulating wall 15 by a screw 26 through a heat insulating plastic washer 25. A sealing material 23 is also applied between the back of the thermal conductor 22, the insulating material (heat insulating material) 27 and the heat insulating wall 15, to prevent the drain water from infiltrating into the part between the thermal conductor 22, the insulating material (heat insulating material) 27 and the heat insulating wall 15.

A drain pan heater 28 is also disposed close to the weir 20C at an end and bottom side of the thermal conductor 22 laid on the surface of the drain pan 20. As is well known, this drain pan heater 28 is composed of a part of a hot gas bypassing pipe (not shown) for guiding high temperature and high pressure hot gas refrigerant discharged out of the compressor 12 directly to the evaporator during a defrosting operation for defrosting frost attached to the evaporator 16 and heats the drain pan 20 by utilizing heat of the hot gas refrigerant that circulates through the pipe during the defrosting.

As is apparent from Figs. 2 and 3, only one line of the drain pan heater is laid closely in contact with the thermal conductor 22 at the end near the weir 20C and the bottom side of the thermal conductor 22 where the drain pan heater 28 will not hamper a flow of drain water that drips from the evaporator 16, flows on the surface of the drain pan 20 and is drained from a drain discharging hole 21.

The present embodiment brings about the following operations and effects by the arrangements described above.

Cooling within the cooler 5 is carried out by circulating air within the cooler 5 by the evaporator 16, by cooling the air by exchanging heat with the refrigerant by the evaporator 16 and by blowing the air into the cooler 5. Moisture within the air dews on the surface of the evaporator 16 during this cooling operation. Then, part of it drips on the drain pan 20 as drain water and is drained to the outside from the drain discharging hole 21. Meanwhile, another part of the dew becomes frost and attaches itself to the surface of the evaporator 16. The defrosting operation is periodically carried out in the refrigerator unit 11 to remove the frost. The defrosting operation is carried out by guiding the high temperature and high pressure hot gas refrigerant compressed by the compressor 12 directly to the evaporator 16 through the hot gas bypassing pipe not shown. At this time, the melted frost drips onto the drain pan 20 as drain water and is drained to the outside from the drain discharging hole 21.

Because the hot gas refrigerant flows through the drain pan heater 28 during the defrosting operation described above, its heat is transferred from the drain pan heater 28 to the thermal conductor 22 and the entire thermal conductor 22 is heated up to high temperature by thermal conduction. Therefore, it is possible to avoid the low temperature drain water that is melted water of the frost from icing again by contact with the cool drain pan and to guide the drain water quickly to the drain discharging hole 21 to drain to the outside.

Thus, according to the present embodiment, it is possible to effectively and quickly transfer the heat of the drain pan heater 28 to the entire heat conductor 22 by utilizing the thermal conduction and to evenly heat the thermal conductor 22, i.e., the surface of the drain pan 20, by disposing the drain pan heater 28 in contact with the part of the thermal conductor 22 made from aluminum alloy or copper alloy that excels in the heat transferring quality and laid on the surface of the drain pan 20.

Accordingly, it is not necessary to dispose the drain pan heater 28 evenly on the whole surface of the drain pan 20. Furthermore, because only one line of the drain pan heater 28 is disposed at the end near the weir 20C on the bottom of the thermal conductor 22 where the drain pan heater 28 will not hamper the flow of the drain water that drips from the evaporator 16, flows over the surface of the drain pan 20 and is drained from the drain discharging hole 21, the drain pan heater 28 will never hamper the drainage of the drain water by acting as a weir. Thus it is also possible to improve the drainage of the drain water and to eliminate the problem of residual water being produced and icing.

Moreover, it is possible to melt ice even if it is produced on the drain pan 20 and to prevent unmelted ice from remaining during the defrosting operation because the entire thermal conductor 22 can be evenly heated by the thermal conduction. Further, because only one line of the drain pan heater 28 is used to eliminate obstructions for the flow of the drain water, an inclination of the slope 20A of the drain pan 20 may be decreased. Thereby, it becomes possible to reduce the size of the unit in a height direction and to downsize and cut its cost.

Still further, because the thermal conductor 22 is laid on the surface of the drain pan 20 through the intermediary of the insulation material (heat insulating material) 27, it is possible to prevent the heat of the drain pan heater 28 and that of the thermal conductor 22 whose temperature may become high, from propagating to the heat insulating wall 15, and thus it is possible to prevent the heat insulating wall 15 from being deformed by the thermal contraction.

Still further, because the drain pan heater 28 is composed of the part of the hot gas bypassing pipe for guiding the defrosting hot gas refrigerant to the evaporator 16 and because it is possible to prevent the residual water and residual ice from being produced due to the thermal conductor 22 provided in the present embodiment, it is possible to reduce a loss of heat that otherwise occurs due to heat exchange between the hot gas refrigerant and the residual water or residual ice on the drain pan heater 28 during the defrosting. Therefore, a heat equivalent to the loss of heat may be effectively utilized in defrosting the evaporator 16. This allows the defrosting performance by the hot gas to be improved and the defrosting time to be shortened.

It should be noted that in the present embodiment described above, the thermal conductor 22 need not always be laid on the whole surface of the drain pan 20 and may be laid only on part of the surface of the drain pan 20 corresponding to an area where the drain water drips from the evaporator 16.

It is also possible to prevent the drain water that drips from the evaporator 16 from remaining and icing within the drain pan 20 and to discharge all the drain water dripping from the evaporator 16 steadily and quickly to the outside via the drain discharging hole 21. This minimizes a range where the thermal conductor 22 is laid and saves the cost required to lay the thermal conductor 22.

### Second Embodiment

Next, a second embodiment of the invention will be explained.

The present embodiment differs from the first embodiment described above in the structure of the drain pan heater 28. The other components are the same as those of the first embodiment, so that their explanation will be omitted here.

According to the present embodiment, the drain pan heater is composed of an electric heater instead of the drain pan heater 28 that is composed of part of the hot gas bypassing pipe.

When the drain pan heater is composed of the electric heater, the same operations and effects as those of the first embodiment are brought about by laying the thermal conductor 22 on the surface of the drain pan 20 and disposing the electric heater in contact with the thermal conductor 22 in the same manner as in the first embodiment. The present embodiment may be suitably applied to a refrigerator unit arranged so that defrosting of the evaporator 16 is carried out by an electric heater.

It should be noted that the invention is not limited to the respective embodiments described above and may be appropriately modified within the range of its spirit. For instance, it is possible to simplify the heat insulating structure by laying the thermal conductor 22 by using foaming polypropylene or the like that excels in heat resistance as the material composing the heat insulating wall 15. Still further, it is possible to provide the insulation material (heat insulating material) 27 only around a peripheral part of the thermal conductor 22 or on the back of the thermal conductor 22 in a grid and to leave other parts as an air layer. Alternatively, it is possible to eliminate the insulating material 27 and to make the whole back of the thermal conductor 22 an air layer, i.e., a heat insulating layer. Furthermore, the invention is widely applicable not only to a refrigerator unit of a cooler 5 of a refrigerator vehicle 1 but also to a refrigerator unit of a refrigerating container or a stationary-type cooler.

## Claims

1. A refrigerator unit (11) in which a drain pan (20) composed of a heat insulating wall (15) is provided under an evaporator (16), and a drain pan heater (28) is disposed in contact with the surface of the drain pan (20),
wherein a thermal conductor (22) is laid on the surface of the drain pan (20); and wherein
the drain pan heater (28) is disposed in contact with the surface of the thermal conductor (22), **characterized in that** said thermal conductor (22) is laid on the surface of the drain pan (20) through the intermediary of a heat insulating layer (27).

2. The refrigerator unit according to Claim 1, wherein the drain pan heater (28) is composed of part of a hot gas bypassing pipe for guiding defrosting hot gas refrigerant to the evaporator (16).

3. The refrigerator unit according to claim 1 or 2, wherein the heat insulating layer (27) is composed of an insulation material or an air layer.

4. The refrigerator unit according to any one of claims 1 to 3, wherein the thermal conductor (22) is composed of a plate made from aluminum alloy or copper alloy.

5. The refrigerator unit according to any one of claims 1 to 4, wherein the thermal conductor (22) is provided only on a part of the surface of the drain pan (20) corresponding to an area where drain water drips from the evaporator (16).

6. The refrigerator unit according to any one of claims 1 to 5, wherein the drain pan heater (28) is disposed at a position separated from an area where the drain water drips from the evaporator (16) and flows to a drain discharging hole (21).

7. The refrigerator unit according to any one of claims 1 to 6, wherein the heat insulating wall (15) makes a partition between the inside and the outside of a cooler (5).

## Patentansprüche

1. Kühlaggregat (11), in dem eine Tropfwasserschale (20), die aus einer Wärmeisolationswand (15) besteht, unter einem Verdampfer (16) vorgesehen ist und ein Tropfschalenerhitzer (28) in Kontakt mit der Oberfläche der Tropfwasserschale (20) angeordnet ist,
wobei auf die Oberfläche der Tropfwasserschale (20) ein Wärmeleiter (22) aufgelegt ist und
wobei der Tropfschalenerhitzer (28) in Kontakt mit der Oberfläche des Wärmeleiters (22) angeordnet ist,
**dadurch gekennzeichnet, daß**
der Wärmeleiter (22) unter Zwischenschaltung einer Wärmeisolationsschicht (27) auf die Oberfläche der Tropfwasserschale (20) aufgelegt ist.

2. Kühlaggregat nach Anspruch 1, wobei der Tropfschalenerhitzer (28) aus einem Teil eines Heißgasumführungsrohres zum Zuführen eines entfrostenden Heißgaskühlmittels zu dem Verdampfer (16) besteht.

3. Kühlaggregat nach Anspruch 1 oder 2, wobei die Wärmeisolationsschicht (27) aus einem Isolationsmaterial oder einer Luftschicht besteht.

4. Kühlaggregat nach einem der Ansprüche 1 bis 3, wobei der Wärmeleiter (22) aus einer Platte aus einer Aluminiumlegierung oder Kupferlegierung besteht.

5. Kühlaggregat nach einem der Ansprüche 1 bis 4, wobei der Wärmeleiter (22) nur auf einem Teil der Oberfläche der Tropfwasserschale (20) vorgesehen ist, der einem Bereich entspricht, in dem Tropfwasser von dem Verdampfer (16) abtröpfelt.

6. Kühlaggregat nach einem der Ansprüche 1 bis 5, wobei der Tropfschalenerhitzer (28) an einer Stelle angeordnet ist, die von einem Bereich getrennt ist, in dem das Tropfwasser von dem Verdampfer (16) abtröpfelt und zu einer Tropfwasserabführöffnung (21) fließt.

7. Kühlaggregat nach einem der Ansprüche 1 bis 6, wobei die Wärmeisolationswand (15) eine Trennwand zwischen dem Innenraum und der Außenseite eines Kühlers (5) bildet.

## Revendications

1. Unité de réfrigérateur (11) dans laquelle un bac de collecte (20) composé d'une paroi d'isolation thermique (15) est prévu sous un évaporateur (16), et un dispositif de chauffage de bac de collecte (28) est disposé en contact avec la surface du bac de collecte (20),
un conducteur thermique (22) étant disposé sur la surface du bac de collecte (20) ; et
le dispositif de chauffage de bac de collecte (28) étant disposé en contact avec la surface du conducteur thermique (22), **caractérisée en ce que** ledit conducteur thermique (22) est disposé sur la surface du bac de collecte (20) par l'intermédiaire d'une couche d'isolation thermique (27).

2. Unité de réfrigérateur selon la revendication 1, dans laquelle le dispositif de chauffage de bac de collecte (28) se compose d'une partie d'un tuyau de dérivation de gaz chaud destiné à guider du réfrigérant gazeux chaud de dégivrage vers l'évaporateur (16).

3. Unité de réfrigérateur selon la revendication 1 ou 2, dans laquelle la couche d'isolation thermique (27) se compose d'un matériau isolant ou d'une couche d'air.

4. Unité de réfrigérateur selon l'une quelconque des revendications 1 à 3, dans laquelle le conducteur thermique (22) se compose d'une plaque fabriquée en alliage d'aluminium ou en alliage de cuivre.

5. Unité de réfrigérateur selon l'une quelconque des revendications 1 à 4, dans laquelle le conducteur thermique (22) est prévu seulement sur une partie de la surface du bac de collecte (20) correspondant à une zone où de l'eau goutte de l'évaporateur (16).

6. Unité de réfrigérateur selon l'une quelconque des revendications 1 à 5, dans laquelle le dispositif de chauffage de bac de collecte (28) est disposé à un emplacement séparé d'une zone où l'eau goutte de l'évaporateur (16) et s'écoule vers un orifice d'évacuation (21).

7. Unité de réfrigérateur selon l'une quelconque des revendications 1 à 6, dans laquelle la paroi thermiquement isolante (15) constitue une cloison entre l'intérieur et l'extérieur d'un dispositif de refroidissement (5).
